# EUROPEAN PATENT APPLICATION

(11) **EP 3 661 229 A1**
(43) Date of publication of application: **03.06.2020**
(21) Application number: 18839456.3
(22) Date of filing: 30.05.2018
(51) Int. Cl.: H04R 9/04, B60Q 5/00, H04R 1/00, H04R 1/22, H04R 9/02

(54) **SOUND PRODUCER FOR VEHICLE**

(30) Priority: 24.07.2017 JP 2017142957
(71) Applicant: Anden Co., Ltd., Anjo-city, Aichi 446-8503 (JP); Pioneer Corporation, Tokyo 113-0021 (JP); Tohoku Pioneer Corporation, Tendo-shi, Yamagata 994-8585 (JP)
(72) Inventor: MIYATA Susumu, Anjo-city Aichi 446-8503 (JP); SATO Junichi, Tendo-shi Yamagata 994-8585 (JP)
(74) Representative: TBK
(86) International application number: PCT/JP2018/020711
(87) International publication number: WO 2019/021617

(57) **Abstract**

A sound generator for a vehicle includes a sounder (20), a housing (16) surrounding the sounder, a connecter unit (101) including an opening (101a) facing outward the housing, and a connecting terminal (30) configured to protrude inward the housing from the opening of the connector unit. A vehicle connector that electrically connects an in-vehicle device is to be attached to the connector unit. The sounder includes a diaphragm (21), a voice coil (23) connected to the diaphragm, and a lead wire (28) extending from the voice coil. The lead wire is directly connected to the connecting terminal in the housing.

## Description

### CROSS REFERENCE TO RELATED APPLICATION

This application is based on Japanese Patent Application No. 2017-142957 filed on July 24, 2017, the disclosure of which is incorporated herein by reference.

### TECHNICAL FIELD

The present disclosure relates to a sound generator for a vehicle including a sounder and a housing.

### BACKGROUND ART

Conventionally, a speaker disclosed in Patent Literature 1 has been known. The speaker includes a frame, a diaphragm, a voice coil, a connector unit, and a lead wire. The diaphragm is connected to an outer peripheral part of the frame. The voice coil is disposed in a center of the diaphragm. The connector unit includes a terminal and is disposed near the outer peripheral part of the frame. The lead wire connects the terminal of the connector unit and the voice coil, and includes a joint connected to the terminal.

A speaker disclosed in Patent Literature 2 has been also known as a sound generator mounted in a vehicle. The speaker includes a sounder to generate sounds, a terminal fitting electrically connected to the sounder through an electrical conducting member, a base to which the sounder is mounted, and a connecting terminal fixed to the base while passing through the base. The connecting terminal includes a protrusion protruding outward the base, and the protrusion is electrically connected to an external device.

### PRIOR ART LITERATURES

### PATENT LITERATURE

Patent Literature 1 : WO 2014/156017 A
Patent Literature 2 : JP 2017-50863 A

### SUMMARY OF INVENTION

When the speaker disclosed in Patent Literature 1 is disposed at a front bumper or the like in a vehicle, the speaker may break down by getting splashed or soaked in water. In addition, dust or foreign matters may enter inside the speaker, which may reduce a quality of sounds of the speaker or damage the speaker.

Accordingly, to improve waterproof property and dustproof property, the speaker needs a housing to surround the speaker. In this case, a connector needs to be formed outside the housing, and a device in the vehicle is connected to the connector through a vehicle connector. Further, a connecting terminal of the connector and a terminal of the connecter unit of the speaker need to be electrically connected with each other through an electrical wire and the like.

Thus, a number of members required to electrically connect the lead wire of the speaker and the connecting terminal disposed in the connector of the housing is increased. Furthermore, a number of steps for assembly is also increased.

In contrast, the speaker disclosed in Patent Literature 2 includes the base forming a part of a housing surrounding the sounder, and improves waterproof property and dustproof property. However, this speaker also increases a number of members to electrically connect the sounder and the connecting terminal disposed on the base forming the part of the housing, and also a number of steps for assembly.

It is an object of the present disclosure to provide a sound generator for a vehicle to reduce a number of members to electrically connect a sounder with a connecting terminal disposed in a housing, and also to reduce a number of steps for assembly.

According to an aspect in the present disclosure, a sound generator for a vehicle includes a sounder, a housing, a connector unit, and a connecting terminal. The sounder includes a diaphragm, a voice coil connected to the diaphragm, and a lead wire extending from the voice coil. The housing surrounds the sounder. The connector unit includes an opening facing outward the housing, and a vehicle connector is to be mounted on the connector unit to electrically connect an in-vehicle device with the connector unit. The connecting terminal is located to protrude inward the hosing from the opening of the connector unit. The lead wire extending from the voice coil is directly connected to the connecting terminal in the housing.

According to such configuration, the sound generator includes the housing surrounding the sounder, and the lead wire extending from the voice coil is directly connected with the connecting terminal in the housing. Thus, a number of steps to assemble the sound generator can be reduced as well as a number of members to electrically connect the sounder with the connecting terminal disposed in the housing.

### BRIEF DESCRIPTION OF DRAWINGS

FIG. 1 is a perspective view of a sound generator for a vehicle according to an embodiment.
FIG. 2 is a front view of the sound generator for a vehicle according to the embodiment.
FIG. 3 is a right side view of the sound generator for a vehicle according to the embodiment.
FIG. 4 is a back view of the sound generator for a vehicle according to the embodiment.
FIG. 5 is a bottom view of the sound generator for a vehicle according to the embodiment.
FIG. 6 is a cross-sectional view taken along a line VI-VI in FIG. 2.
FIG. 7 is a cross-sectional view taken along a line VII-VII in FIG. 2.
FIG. 8 is a partially enlarged view of the back view of the sound generator according to the embodiment without a casing.
FIG. 9 is an enlarged view of a IX part in FIG. 6.
FIG. 10 is a cross-sectional view taken along a line X-X in FIG. 8 with a top-to-bottom direction inverted.

### DESCRIPTION OF EMBODIMENTS

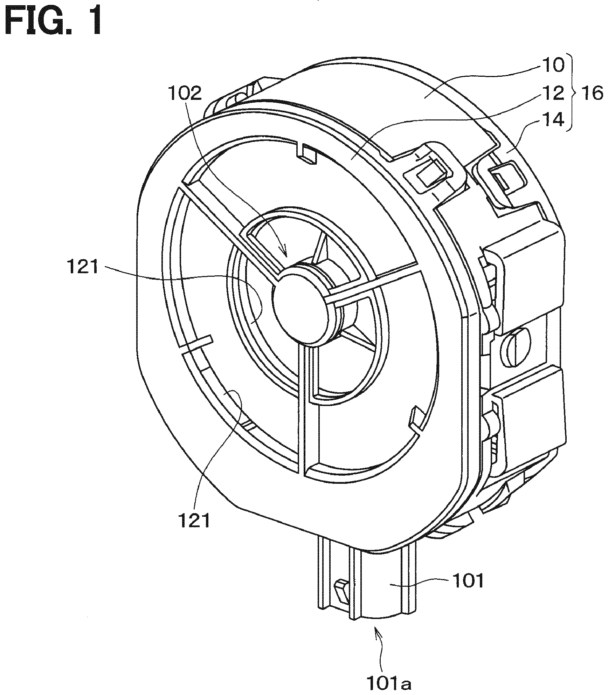

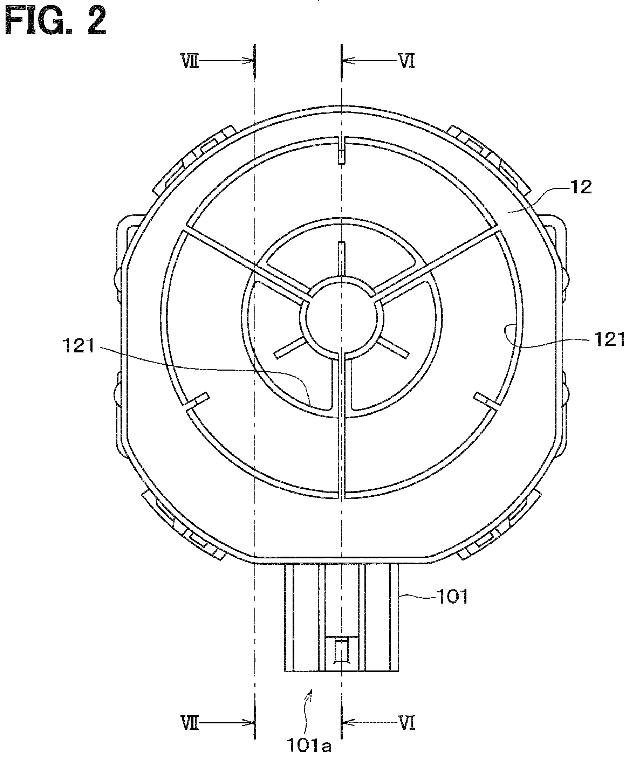

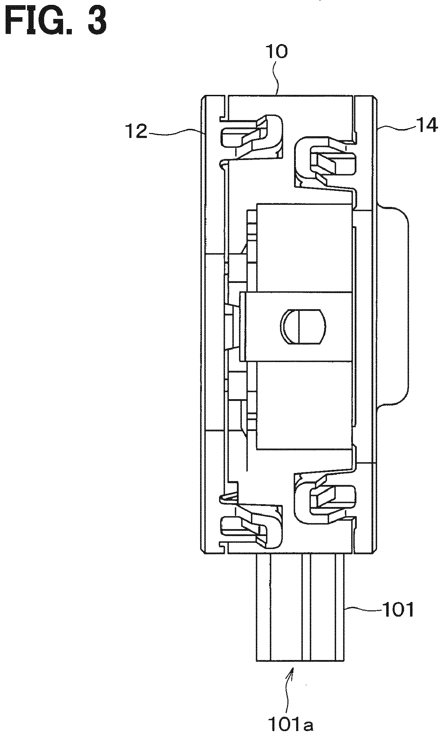

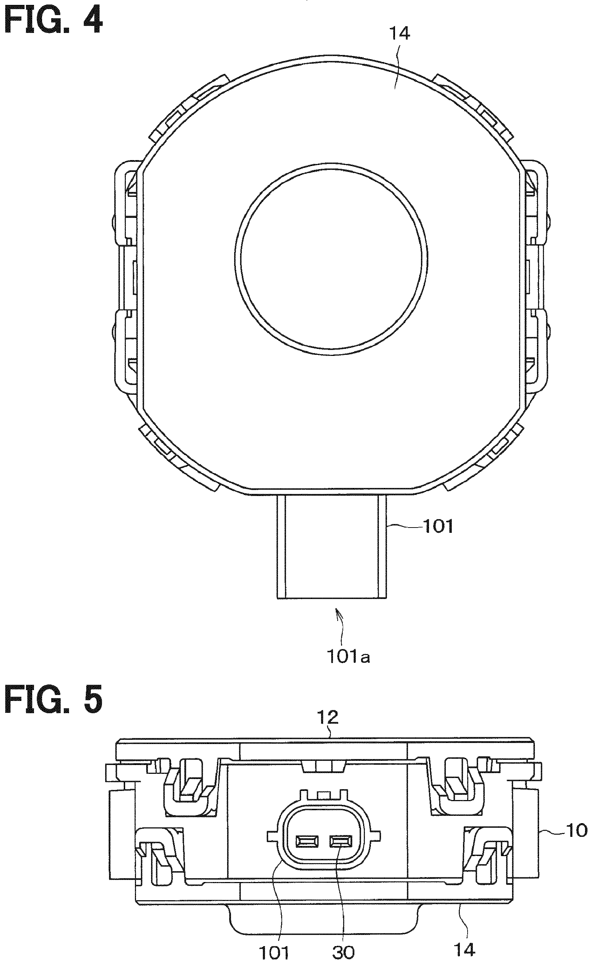

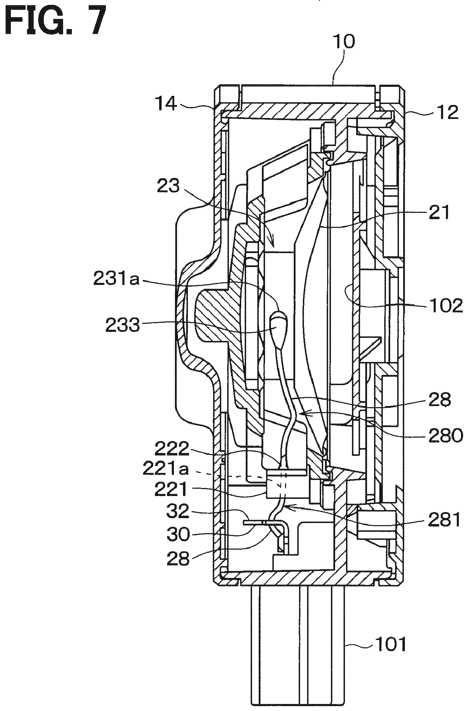

A sound generator for a vehicle according to an embodiment will be described with reference to FIGS. 1 to 8. The sound generator for a vehicle may be disposed in a vehicle and used for releasing an alarm outside a vehicle cabin.

As shown in FIGS. 1 to 5, a housing 16 houses a sounder 20 and includes a base 10, a casing 14, and a cover 12 which are all made of resin. The base 10 has a substantially cylindrical shape. The cover 12 is located at a first end of the base 10 closer to a sound releasing surface 20a of the sounder 20. The casing 14 is located at a second end of the base 10 that is away from the sound releasing surface 20a of the sounder 20.

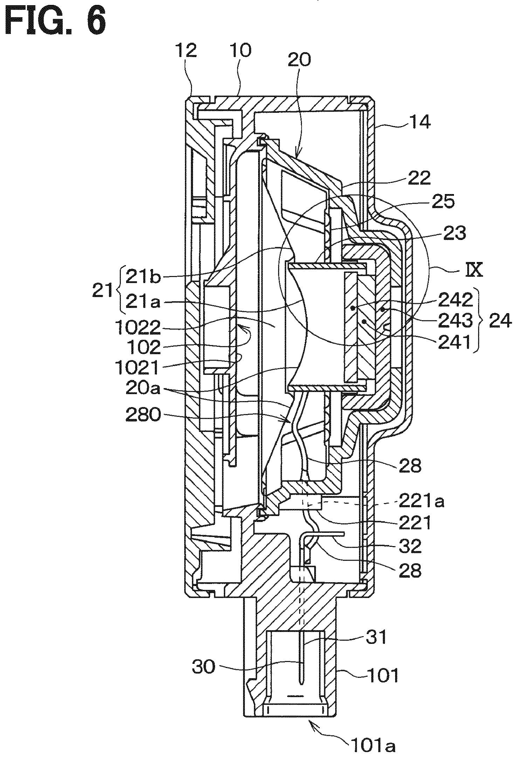

As shown in FIGS. 6 to 8, the cover 12 having a substantially bottomed cylindrical shape is connected to an opening located at the first end of the base 10 to cover the first end of the base 10. The casing 14 having a substantially bottomed rectangular tubular shape is connected to an opening located at the second end of the base 10 to close the second end of the base 10.

A connecting part between the base 10 and the casing 14 is sealed with a sealing member. Specifically, the connecting part between the base 10 and the casing 14 is sealed with an adhesive. The sounder 20 is sealed to the base 10 by a sealing member. The cover 12 includes a sound releasing hole 121 to release an alarm of the sounder 20 outward. The cover 12 including the sound releasing hole 121 forms a front surface of the sound generator and the casing 14 forms a back surface of the sound generator.

The sounder 20 generating sounds in response to an electric signal is housed in a space formed inside the housing 16. The sounder 20 is attached to the base 10 such that the sound releasing surface 20a faces the cover 12. The housing 16 improves water proof property and dustproof property for the sounder 20. That is, the housing 16 protects the sounder 20 from damages caused by getting directly splashed or dusts, prevents a submersion of the sounder 20 caused by water exposure, and prevents foreign matters from entering into the sounder 20. A diffuser 102 is disposed in the base 10. The diffuser 102 adjusts a quality of sounds generated by the sounder 20. The diffuser 102 is disposed to face the sound releasing surface 20a of the sounder 20. The diffuser 102 includes a shielding wall 1021 forming a resonance chamber 1022. The diffuser 102 amplifies a sound pressure of sounds released from the sound releasing surface 20a of the sounder 20 using a resonance effect of the resonance chamber 1022 formed by the shielding wall 1021.

The sounder 20, the base 10, and the casing 14 define a closed container having a predetermined closed volume on a back side of the sounder 20 in the housing 16. The closed container functions as an air spring and can amplify a pressure of sounds including resonance frequencies of a diaphragm 21. The diffuser 102 in the embodiment is integrally formed with the base 10.

A connector unit 101 having a tubular shape protrudes from an outer peripheral surface of the base 10 of the housing 16. The connector unit 101 includes an opening 101a facing outward the base 10. A vehicle connector (not shown) which electrically connects an in-vehicle device with the sound generator is configured to be attached to the opening 101a.

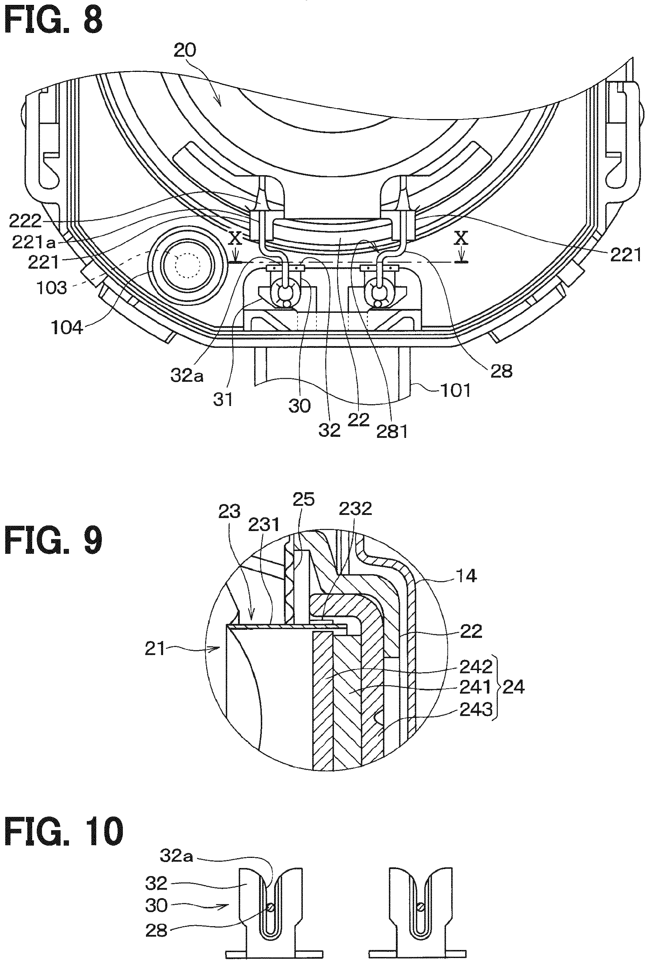

As shown in FIG. 8, the base 10 includes a through hole 103 in communication with an outside of the base 10 and a space defined by the base 10, the casing 14, and the sounder 20. The through hole 103 reduces a pressure fluctuation in response to a temperature fluctuation in the space. The through hole 103 is covered with a pressure adjusting membrane 104 including fibers having a property of being able to allow air to pass therethrough but not to allow water to pass therethrough.

The connector unit 101 includes two connecting terminals 30 inside of the opening 101a. Each of the connecting terminals 30 is a metal plate member having an electric conductivity. The connecting terminal 30 is disposed to protrude toward the opening 101a of the connector unit 101 from an inside of the housing 16. Specifically, a side surface of the base 10 includes a hole in communication with the opening 101a of the connector unit 101 and the inside of the housing 16. The connecting terminal 30 is fixed to the hole by press-fitting.

As shown in FIGS. 6 to 8, and 10, the connecting terminal 30 is formed with a plate shape member. The connecting terminal 30 includes a body 31 disposed to pass through the side surface of the base 10 and a protrusion 32. The body 31 and the protrusion 32 are formed to have an L-shape. The protrusion 32 includes a supporting member 32a. The supporting member 32a has a groove shape.

A lead wire 28 is inserted in the supporting member 32a formed at the protrusion 32 of the connecting terminal 30, and a tip of the lead wire 28 is fixed to the body 31 of the connecting terminal 30 within the housing 16 by soldering.

As shown in FIG. 8, a bending point 281 is formed at the lead wire 28 between a fixing member 221 and the connecting terminal 30. The bending point 281 is formed such that the lead wire 28 bents at a substantially right angle. A degree of bending angle of the lead wire 28 is not limited to the substantially right angle, for example, the bending point 281 may be formed such that the lead wire 28 forms a gentle curve.

Next, the sounder 20 will be described. As shown in FIG. 6, the sounder 20 includes the diaphragm 21 to oscillate and generate sounds, a frame 22 to fix the diaphragm 21, a voice coil 23 to oscillate the diaphragm 21, a magnetic circuit 24 to generate a magnetic field, and a damper 25 to support the voice coil 23.

The diaphragm 21 includes an inner circumferential part 21a located at a center of the diaphragm 21 and an outer circumferential part 21b located around an outer circumference of the inner circumferential part 21a. The diaphragm 21 is connected to a first end of the voice coil 23 at an outer end of a back surface of the inner circumferential part 21a. The diaphragm 21 is also supported by an outer peripheral part of the frame 22 at an outer end of the outer circumferential part 21b. The sounder 20 includes the sound releasing surface 20a that is a front surface of the diaphragm 21 closer to the front surface of the sound generator for a vehicle. The sound releasing surface 20a has a waterproof structure that prevents water from passing therethrough.

The frame 22 supports the diaphragm 21 by being in contact with the outer end of the diaphragm 21. As shown in FIG. 8, the sound generator includes two of a fixing member 221 to fix a part of the lead wire 28 between an end and a different end of the lead wire 28. The fixing member 221 is located at a portion of the frame 22 facing to the connector unit 101. Each of the fixing members 221 has a substantially rectangular parallelepiped shape. The two fixing members 221 and the frame 22 are integrally molded with resin.

A surface of the fixing member 221 closer to the casing 14 includes a groove 221a having a liner shape. Specifically, the sounder 20 is disposed such that the sound releasing surface 20a faces the first end of the base 10, and the groove 221a is formed on a surface of the fixing member 221 facing the second end of the base 10.

The lead wire 28 is inserted in the groove 221a formed at each fixing member 221. That is, the fixing member 221 includes multiple grooves 221a and two lead wires 28 are respectively inserted in the grooves 221a formed at the fixing member 221. The lead wire 28 is inserted in the groove 221a, and the fixing member 221 thereby fixes the lead wire 28.

A bending point 280 is formed at the lead wire 28 between the voice coil 23 and the fixing member 221. The bending point 280 is formed such that the lead wire 28 forms a gentle curve. A degree of bending angle of the lead wire 28 is not limited to the gentle curve, for example, the lead wire 28 may form the bending point 280 such that the lead wire 28 forms a substantially right angle.

As shown in FIGS. 6, 7, 9, the voice coil 23 includes a bobbin 231 having a cylindrical shape and a coil wire 232 wound around an outer circumferential surface of the bobbin 231. A copper foil (not shown) to connect the coil wire 232 with the lead wire 28 is attached to the outer circumferential surface of the bobbin 231. The outer circumferential surface of the bobbin 231 includes a joint 231a to connect an end of the coil wire 232 and the end of the lead wire 28. The coil wire 232 and the copper foil are connected with each other by soldering at the joint 231a.The lead wire 28 and the copper foil are connected with each other by soldering at the joint 231a. An elastic adhesive having a relatively large elasticity is applied to a root of the lead wire 28 at the joint 231a. The elastic adhesive forms a reinforcing member 233 to reinforce the root of the lead wire 28. The elastic adhesive may be a silicon-based adhesive.

The lead wire 28 is formed as a tinsel wire including a core wire including a fiber and the like and multiple cupper foil threads wound around the core wire (which are not shown). The lead wire 28 extends from the voice coil 23 out of the frame 22.

As shown in FIG. 6, the magnetic circuit 24 is located at a back side of the voice coil 23. The magnetic circuit 24 includes a magnet 241, a pole piece 242, and a yoke 243.

The magnet 241 has a disc shape and is fixed to a bottom surface of the yoke 243 having a bottomed cylindrical shape. The pole piece 242 having a disc shape is located on a surface of the magnet 241 opposite to the bottom surface of the yoke 243. A surface of the magnet 241 is in contact with the bottom surface of the yoke 243 and an opposite surface of the magnet 241 is in contact with a surface of the pole piece 242.

The pole piece 242 forms a magnetic path together with the yoke 243. The pole piece 242 and the yoke 243 are made of magnetic material such as iron. The pole piece 242 is located in an inner peripheral part of the coil wire 232 wound around the bobbin 231.

A minute gap is formed between the inner peripheral part of the yoke 243 and the outer peripheral part of the bobbin 231. The coil wire 232 of the voice coil 23 is located in the minute gap formed between the yoke 243 and the outer peripheral part of the bobbin 231.

A magnetic field is formed in the gap between the yoke 243 and the outer peripheral part of the bobbin 231, and the magnetic field is applied to the coil wire 232. When current flows through the coil wire 232 with the magnetic field applied to the coil wire 232, the bobbin 231 is displaced and oscillates in an axial direction of the bobbin 231 while supported by the damper 25. The oscillation propagates to the diaphragm 21 and the diaphragm 21 thereby oscillates to generate sounds.

Next, assembly of the sound generator for a vehicle will be described.

First, the sounder 20 is prepared. The sounder 20 in this embodiment is prepared in a state where the diaphragm 21, the frame 22, the voice coil 23, the magnetic circuit 24, and the damper 25 are assembled and the lead wire 28 extends from the sounder 20. The lead wires 28 of the sounder 20 are adjusted to have a predetermined length beforehand.

The lead wire 28 extending from the sounder 20 is inserted in the groove 221a between the end and the different end of the lead wire 28. The groove 221a is formed on the surface of the fixing member 221 of the frame 22 facing the casing 14. When the lead wire 28 is inserted in the groove 221a formed on the fixing member 221 of the frame 22, tensile force may be applied to the lead wire 28. To relief the tensile force of the lead wire 28, the lead wire 28 has looseness and a bending point between the voice coil 23 and the fixing member 221. In this way, the bending point 280 is formed at the lead wire 28 located between the voice coil 23 and the fixing member 221.

In addition, a reinforcing member 222 to reinforce the lead wire 28 is formed at a root of the lead wire 28 extending from the groove 221a formed on the fixing member 221 toward the voice coil 23. In this embodiment, elastic adhesive having a relatively large elasticity is attached to the root of the lead wire 28 extending from the groove 221a formed on the fixing member 221 toward the voice coil 23 to form the reinforcing member 222. The elastic adhesive may be a silicon-based adhesive.

Next, the base 10, the casing 14, and the cover 12 are prepared. Then, the connecting terminal 30 is assembled to the base 10. Specifically, the connecting terminal 30 is fixed to the hole in communication with the opening 101a of the connector unit 101 and the inside of the housing 16 by press-fitting. To ensure airtightness, an adhesive is applied from the inside of the housing 16 to the connecting part between the connecting terminal 30 and the hole in communication with the opening 101a of the connector unit 101 and the inside of the housing 16.

After an adhesive is applied all around the outer end of the outer circumferential part 21b of the diaphragm 21, the sounder 20 is inserted in the base 10 from a back side of the base 10 and adhesively fixed in the base 10. The back side is a side of the base 10 to which the casing 14 is mounted. The sounder 20 may be adhesively fixed in the base 10 after an adhesive is applied to the base 10.

The tip of the lead wire 28 is inserted in the supporting member 32a formed at the protrusion 32 of the connecting terminal 30 and temporarily fixed.

After forming the bending point 281 at the lead wire 28 located between the fixing member 221 and the connecting terminal 30, the tip of the lead wire 28 is connected to the body 31 of the connecting terminal 30 in the housing 16 by soldering. According to this, the lead wire 28 extending from the voice coil 23 is directly connected to the connecting terminal 30 inside the housing 16.

The length of the lead wire 28 in the sounder 20 is adjusted to the predetermined length beforehand, thus the tip of the lead wire 28 is able to be connected to the body 31 of the connecting terminal 30 by soldering without a cutting step for adjusting an extra length of the lead wire 28.

An adhesive is applied to the connecting part between the base 10 and the casing 14. Thus, a space defined by the base 10, the casing 14, and the sounder 20 gets sealed.

After an adhesive is applied to a connecting part between the cover 12 and the base 10, the cover 12 is adhered to the base 10. In this way, the assembly of the sound generator for a vehicle is completed.

Next, an operation of the sound generator for a vehicle will be described.

The vehicle connector electrically connects an in-vehicle device with the connector unit 101 formed in the base 10. When the vehicle connector is attached to the connector unit 101, electrical signals (i.e., acoustic signals) from the in-vehicle device are inputted to the coil wire 232 of the voice coil 23 through the connecting terminal 30 and the lead wire 28 in order. Thus, the bobbin 231 of the voice coil 23 is displaced and oscillates in the axial direction of the bobbin 231 with supported by the damper 25. This oscillation propagates to the diaphragm 21, the sounder 20 thereby generates sounds. The sounds generated by the sounder 20 are released outward as an alarm from the sound releasing hole 121 formed on the cover 12.

As described above, the sound generator for a vehicle in this embodiment includes the sounder 20 and the housing 16 surrounding the sounder 20. The sounder 20 includes the diaphragm 21, the voice coil 23 connected to the diaphragm 21, and the lead wire 28 extending from the voice coil 23. In addition, the sound generator includes the connector unit 101 including the opening 101a facing outward the housing 16, and the connecting terminal 30 located to protrude inward the housing 16 from the opening 101a of the connector unit 101. The vehicle connector that electrically connects an in-vehicle device with the connector unit 101 is to be attached to the connector unit 101. The lead wire 28 extending from the voice coil 23 is directly connected to the connecting terminal 30 in the housing 16.

According to this configuration, the sound generator includes the housing 16 surrounding the sounder 20, and the lead wire 28 extending from the voice coil 23 is directly connected to the connecting terminal 30 in the housing 16. Thus, a number of steps for the assembly can be reduced as well as a number of members for the electric connection between the sounder 20 and the connecting terminal 30 located in the housing 16.

The voice coil 23 includes the coil wire 232 and the bobbin 231 around which the coil wire 232 is wound. The bobbin 231 includes the joint 231a connected with the end of the coil wire 232 and the end of the lead wire 28. Accordingly, the joint 231a can directly connect the end of the coil wire 232 with the end of the lead wire 28.

The connecting terminal 30 includes the supporting member 32a to support the lead wire 28. Thus, when the lead wire 28 extending from the voice coil 23 is directly connected to the connecting terminal 30 in the housing 16, the lead wire 28 can be temporarily fixed to the supporting member 32a. Therefore, an extra length of the lead wire 28 can be adjusted easily and an operational efficiency of the connection of the lead wire 28 and the connecting terminal 30 can be improved.

The housing 16 includes the base 10 having a tubular shape, and the casing 14 disposed at the first end of the base 10. The sounder 20 is mounted on the base 10. The sounder 20 is sealed to the base 10 by a sealing member, and the connecting part between the base 10 and the casing 14 is sealed with a sealing member.

The sounder 20 is sealed to the base 10 by the sealing member and the connecting part between the base 10 and the casing 14 is sealed with the sealing member, thereby improving waterproof property and dustproof property.

The base 10 includes the diffuser 102 to adjust a quality of sounds generated by the sounder 20. The quality of sounds generated by the sounder 20 can be adjusted by a resonance effect of the diffuser 102.

The base 10 and the diffuser 102 are integrally molded. Thus, the assembly of the diffuser 102 to the base 10 is unneeded, thereby improving the operational efficiency of the assembly.

By the way, when the sounder 20 releases sounds, the oscillation of the voice coil 23 and the diaphragm 21 propagates to the lead wire 28 extending from the voice coil 23. If a length between the voice coil 23 and the connecting terminal 30 is relatively long and the lead wire 28 is not fixed to the fixing member 221 between the end and the different end of the lead wire 28, a natural frequency of the oscillation generated at the lead wire 28 may be reduced. In this case, an endurance of the lead wire 28 against the oscillation may be reduced, which may further cause the lead wire 28 to be easily disconnected by the oscillation and a lifetime of the sounder 20 to be reduced.

In contrast, in the sound generator for a vehicle, the sounder 20 includes the frame 22 to fix the diaphragm 21, and the frame 22 includes the fixing member 221 to fix the lead wire 28 between the end and the different end of the lead wire 28.

As a result, the fixing member 221 fixes the lead wire 28 between the end and the different end, thereby increasing the natural frequency of the oscillation generated at the lead wire 28 and the endurance of the lead wire 28 against the oscillation. Thus, the lead wire 28 can be prevented from being disconnected due to the oscillation and the lifetime of the sounder 20 can be lengthened.

The fixing member 221 includes the groove 221a. A width of the groove 221a is shorter than a wire diameter of the lead wire 28, and the lead wire 28 is inserted in the groove 221a formed on the fixing member 221. Specifically, the width of the groove 221a is slightly shorter than the wire diameter of the lead wire 28, and the lead wire 28 is supported in the groove 221a while the lead wire 28 is inserted in the groove 221a and elastically deformed. In this time, reaction force to return to an initial shape is generated at the lead wire 28, which generates supporting force between the groove 221a and the lead wire 28.

The wire diameter of the lead wire 28 is wider than the width of the groove 221a and the lead wire 28 is inserted in the groove 221a formed on the fixing member 221. Thus, the supporting force between the groove 221a and the lead wire 28 is generated, which fixes the lead wire 28 easily.

The sounder 20 is located such that the sound releasing surface 20a faces the first end of the base 10, and the groove 221a is formed on the surface of the fixing member 221 facing the second end of the base 10. The groove 221a is formed on the surface of the fixing member 221 facing to the second end of the base 10, thus the lead wire 28 can be easily fixed to the fixing member 221 from the surface of the fixing member 221 facing the second end of the base 10.

The lead wire 28 is one of multiple lead wires and the groove 221a is one of multiple grooves formed on the fixing member 221. The multiple lead wires 28 are respectively inserted in the grooves 221a formed on the fixing member 221, and the fixing member 221 is integrally molded with the frame 22 with resin.

The fixing member 221 is integrally molded with the frame 22 with resin and the multiple lead wires 28 are respectively inserted in the grooves 221a formed on the fixing member 221, which prevents a short circuit among the multiple lead wires 28. Further, the fixing member 221 is integrally molded with the frame 22 with resin, which reduces a number of members compared with a case where the fixing member 221 is added to the frame 22 as a separate member.

By the way, if the lead wire 28 is fixed to the fixing member 221 between the end and the different end, the oscillation propagating to the lead wire 28 from the voice coil 23 and the diaphragm 21 may cause a disconnection of the lead wire 28 at the root of the lead wire 28 extending from the groove 221a formed on the fixing member 221 toward the voice coil 23.

However, as described above, the root of the lead wire 28 extending from the groove 221a formed on the fixing member 221 toward the voice coil 23 includes the reinforcing member 222 to reinforce the lead wire 28.

Thus, stress applied to the root of the lead wire 28 can be relieved, which can prevent a disconnection of the lead wire 28.

The sound generator for a vehicle includes the bending point 280 at the lead wire 28 located between the voice coil 23 and the fixing member 221. Accordingly, the tension of the lead wire 28 located between the voice coil 23 and the fixing member 221 is relieved, thereby preventing the disconnection of the lead wire 28 caused by the oscillation.

The bending point 281 is formed at the lead wire 28 located between the fixing member 221 and the connecting terminal 30. Thus, the tension of the lead wire 28 located between the fixing member 221 and the connecting terminal 30 is relieved, thereby preventing the disconnection of the lead wire 28 caused by the oscillation.

### (Other Embodiment)

In above-mentioned embodiment, the sound generator for a vehicle is described as a sound generator mounted in the vehicle to release an alarm outward the vehicle cabin, but the sound generator may be used as a sound generator releasing a sound other than the alarm.

In above-mentioned embodiment, the tinsel wire is used as the lead wire 28, but wires other than the tinsel wire may be used as the lead wire 28.

The present disclosure is not limited to the above-mentioned disclosure, and may be suitably modified within the scope described in claims. The above embodiments are not independent each other, and can be appropriately combined each other unless such a combination is obviously impossible. In each of the above-mentioned embodiments, it goes without saying that components of the embodiment are not necessarily for a case in which the components are particularly clearly specified as essential components, a case in which the components are clearly considered in principle as essential components, and the like. A quantity, a value, an amount, a range, or the like, if specified in the above-described example embodiments, is not necessarily limited to the specific value, amount, range, or the like unless it is specifically stated that the value, amount, range, or the like is necessarily the specific value, amount, range, or the like, or unless the value, amount, range, or the like is obviously necessary to be the specific value, amount, range, or the like in principle. Furthermore, a material, a shape, a positional relationship, or the like, if specified in the above described example embodiments, is not necessarily limited to the specific material, shape, positional relationship, or the like unless it is specifically stated that the material, shape, positional relationship, or the like is necessarily the specific material, shape, positional relationship, or the like, or unless the material, shape, positional relationship, or the like is obviously necessary to be the specific material, shape, positional relationship, or the like in principle.

## Claims

1. A sound generator for a vehicle, comprising:
a sounder (20) including:
a diaphragm (21);
a voice coil (23) connected to the diaphragm; and
a lead wire (28) extending from the voice coil;
a housing (16) surrounding the sounder;
a connector unit (101) including an opening (101a) facing toward outside the housing, a vehicle connector configured to be mounted on the connector unit to electrically connect the connector unit with a device in the vehicle; and
a connecting terminal (30) located to protrude inward the housing from the opening of the connector unit, wherein
the lead wire extending from the voice coil is directly connected to the connecting terminal in the housing.

2. The sound generator for a vehicle according to claim 1, wherein
the voice coil includes a coil wire (232) and a bobbin (231) around which the coil wire is wound, and
the bobbin includes a joint (231a) connected to an end of the coil wire and an end of the lead wire.

3. The sound generator for a vehicle according to claim 1 or 2, wherein
the connecting terminal includes a supporting member (32a) configured to support the lead wire.

4. The sound generator for a vehicle according to any one of claims 1 to 3, wherein
the housing includes:
a base (10) having a tubular shape, the base on which the sounder is mounted; and
a casing (14) located at a first end of the base,
the sounder is mounted on and sealed to the base by a sealing member, and
a connecting part between the base and the case is sealed with a sealing member.

5. The sound generator for a vehicle according to claim 4, wherein
the base includes a diffuser (102) to adjust a quality of sounds released by the sounder.

6. The sound generator for a vehicle according to claim 5, wherein
the base and the diffuser are integrally molded.

7. The sound generator according to any one of claims 1 to 6, wherein
the sounder includes a frame (22) to fix the diaphragm, and
the frame includes a fixing member (221) configured to fix the lead wire between one end and a different end of the lead wire.

8. The sound generator for a vehicle according to claim 7, wherein
the fixing member includes a groove (221a),
a width of the groove is shorter than a wire diameter of the lead wire, and the lead wire is inserted in the groove formed on the fixing member.

9. The sound generator for a vehicle according to claim 8, wherein
the housing includes a base (10) having a tubular shape, the base on which the sounder is mounted,
the sounder is located such that a sound releasing surface (20a) of the sounder faces to a first end of the base, and
the groove is formed on a surface of the fixing member facing a second end of the base.

10. The sound generator for a vehicle according to claim 8 or 9, wherein
the lead wire is one of a plurality of lead wires,
the groove is one of a plurality of grooves,
the plurality of lead wires are respectively inserted in the plurality of grooves formed on the fixing member, and
the fixing member is integrally formed with the frame with resin.

11. The sound generator for a vehicle according to any one of claims 8 to 10, wherein
the lead wire includes a reinforcing member (222) at a root of the lead wire extending from the groove formed on the fixing member toward the voice coil to reinforce the lead wire.

12. The sound generator for a vehicle according to any one of claims 7 to 11, wherein
the lead wire includes a bending point (280) located between the voice coil and the fixing member.

13. The sound generator for a vehicle according to any one of claims 7 to 12, wherein
the lead wire includes a bending point (281) located between the fixing member and the connecting terminal.
